# FASCICULE DE BREVET EUROPEEN

(11) **EP 4 348 275 B1**
(45) Date de publication et mention de la délivrance du brevet: **17.12.2025**
(21) Numéro de dépôt: 22729685.2
(22) Date de dépôt: 20.05.2022
(51) Int. Cl.: G01P 5/06, G01P 13/02

(54) **SONDE DE MESURE AERODYNAMIQUE**
AERODYNAMISCHE MESSSONDE
AERODYNAMIC MEASUREMENT PROBE

(30) Priorité: 27.05.2021 FR 2105491
(43) Date de publication de la demande: 10.04.2024
(73) Titulaire: THALES, 92190 Meudon (FR)
(72) Inventeur: PEREZ, François, 86101 CHATELLERAULT (FR); LOIL, Eric, 86101 CHATELLERAULT (FR); PETIT, Serge, 26027 VALENCE CEDEX (FR)
(74) Mandataire: Atout PI Laplace
(86) Numéro de dépôt international: PCT/EP2022/063675
(87) Numéro de publication internationale: WO 2022/248345

(56) Documents cités:
- NL-A- 2 012 457
- US-A1- 2004 188 945
- US-A1- 2016 033 356

## Description

L'invention porte sur une sonde de mesure aérodynamique destinée à mesurer une incidence locale de flux d'air circulant le long du fuselage d'un aéronef, notamment une sonde d'incidence (AOA) ou de dérapage (SSA).

Selon une technique connue, les sondes de mesure aérodynamique destinées à mesurer une incidence (AOA) ou un dérapage (SSA) comprennent un ensemble mobile en rotation destinée à s'orienter dans l'axe du flux d'air entourant l'aéronef sur lequel le support fixe ou solidaire du fuselage est installé.

La mesure de l'incidence locale d'un flux d'air contre le fuselage d'un aéronef est un paramètre essentiel à son pilotage. Elle permet de définir la direction du vecteur vitesse de l'aéronef par rapport à l'écoulement d'air ambiant qui l'entoure.

L'utilisation d'un ensemble mobile situé à l'extérieur de l'aéronef le rend par conséquent exposé à des conditions environnementales sévères parmi lesquelles le risque de givrage.

Il est connu des sondes qui possèdent une plaque de protection de géométrie plane. Cette plaque de protection assure une continuité de géométrie avec le fuselage de l'aéronef porteur.

Les sondes de mesure aérodynamique connues ne permettent pas d'assurer le maintien d'une sonde de mesure aérodynamique avec une plaque interface ou capot ayant une masse optimisée tout en garantissant la tenue mécanique, la continuité électrique et une protection thermique.

Il est connu, dans le document EP 3444618 B1, comme illustré sur la figure 1 correspondant à la figure 2B du document EP 3444618 B1, une sonde avec une plaque de protection plane. L'élément rotatif 26 a un socle 24 qui est totalement immergé sous la plaque plane 14.

L'enfouissement du socle de la girouette en dessous de la plaque de protection peut nuire à la précision de mesure.

L'absence de point d'arrêt de l'écoulement sur le socle de la girouette produit une génération de courants de retour dirigés de l'aval vers l'amont dans l'interstice 50, en considérant le sens de l'écoulement d'air.

Une telle sonde permet de limiter les échanges convectifs avec l'air froid (et les gouttelettes d'eau et cristaux qu'il transporte) mais nuit à la précision de la mesure.

Il est mentionné dans le document EP 3444618 B1, une plaque plane faite en aluminium ou autre métal, ou en un autre matériau convenant en termes de conduction thermique, comme le titane, les polymères ou matériaux composites.

Cependant dans un mode de réalisation par exemple décrit dans le document EP 3444618 B1, si la plaque interface ou capot était mise en œuvre avec un polymère, la tenue mécanique du capot aux différents cas de chargement, la tenue aux dégradations liées au temps, ainsi que la continuité électrique entre l'élément mobile et le fuselage ne sont pas assurés.

US2004188945A1 divulgue un dispositif d'étanchéité et NL2012457A divulgue la fabrication par moulage d'un élément de raccordement de structure

Un but de l'invention est de pallier les problèmes précédemment cités et notamment d'assurer le maintien d'une sonde de mesure aérodynamique avec une plaque interface ou capot ayant une masse optimisée tout en garantissant la tenue mécanique, la continuité électrique et une protection thermique.

Il est proposé, selon un aspect de l'invention, une sonde de mesure aérodynamique destinée à mesurer une incidence locale de flux d'air circulant le long du fuselage d'un aéronef, comprenant un support, un corps réchauffé et un arbre mobile en rotation selon un axe longitudinal, par rapport au support et au corps, le support, le corps et l'arbre étant configurés pour former entre eux un interstice, permettant de maintenir un jeu fonctionnel pour laisser pivoter librement une extrémité de l'arbre dans le support, et communiquant avec un circuit d'évacuation d'impuretés, l'arbre comprenant une partie interne au support, une partie girouette externe au support et un plateau embase de la partie girouette reliant la partie interne et la partie externe, le support comprenant un capot ou plaque circulaire avec un ouverture centrale traversée par l'arbre mobile la surface externe du capot comprenant une face tronconique de révolution autour de l'axe longitudinal, le capot comprenant du polyetheretherketone renforcé avec des fibres de verre ou de carbone, de conductivité thermique inférieure à 3 W.m^{-1.}K⁻¹, et étant muni d'inserts métalliques au niveau de ses fixations, au moins un insert métallique étant configuré pour réaliser une liaison électrique entre la partie intérieure de la sonde et une interface de l'insert métallique disposé sous le pourtour inférieur de la partie de l'insert métallique la plus éloignée de l'arbre.

L'utilisation d'un capot comprenant du polyetheretherketone renforcé avec des fibres de verre ou de carbone, de conductivité thermique inférieure à 3 W.m^{-1.}K⁻¹, muni d'inserts métalliques au niveau de ses fixations permet d'assurer le maintien d'une sonde de mesure aérodynamique avec une plaque interface ou capot en ayant une masse optimisée tout en garantissant la tenue mécanique, et la présence d'au moins un insert métallique de continuité électrique configuré pour réaliser une liaison électrique entre la partie intérieure de la sonde et une interface de l'insert métallique disposé sous le pourtour inférieur de la partie de l'insert métallique la plus éloignée de l'arbre.

De tels matériaux rendent possible l'obtention d'une pièce de structure composite par moulage en injection thermoplastique, avec des zones d'évidement ou de rigidification permettant de minimiser sa masse, une contribution optimale des fibres de verre pour le renfort mécanique ou la variation de certaines propriétés du matériau (coefficient de dilatation) dans certaines directions privilégiées de la pièce (anisotropie) et l'implantation d'inserts métalliques pour la maitrise des contraintes d'assemblage, d'étanchéité et de continuité électrique inhérent à la sonde.

Selon un mode de réalisation, le capot comprend des premiers inserts en acier inoxydable disposés de manière circulaire vers l'extérieur du capot, et des deuxièmes inserts en laiton disposés de manière circulaire vers l'intérieur du capot.

Ainsi, la protection thermique est renforcée avec la présence de polyetheretherketone renforcé avec des fibres de verre ou de carbone, de conductivité thermique inférieure à 3 W.m-1.K-1, entre la couronne d'inserts extérieure et la couronne d'inserts intérieure. Les inserts permettent de garantir la tenue mécanique sous différents cas de charge en encaissant les contraintes et limitant le fluage du polyetheretherketone.

Dans un mode de réalisation, un insert métallique de continuité électrique comprend un premier insert et un deuxième insert ainsi qu'une portion en acier inoxydable reliant ledit premier insert et ledit deuxième insert.

Ainsi, la continuité électrique est assurée entre la partie interne de la sonde et le fuselage de l'avion sur laquelle elle est montée.

Selon un mode de réalisation, le capot comprend un dégagement sur sa partie supérieure, configuré pour accéder à la partie supérieure de la portion en acier inoxydable de l'insert métallique de continuité électrique, à proximité de son deuxième insert.

L'invention sera mieux comprise à l'étude de quelques modes de réalisation décrits à titre d'exemples nullement limitatifs et illustrés par le dessin annexé sur lequel :

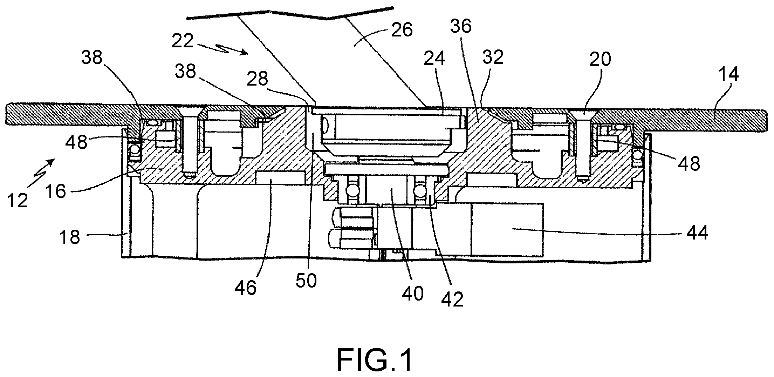

[Fig.1] illustre schématiquement une sonde de mesure aérodynamique, selon l'état de l'art ;
[Fig.2] illustre schématiquement une vue de coupe d'une sonde de mesure aérodynamique, selon un aspect de l'invention ;
[Fig.3] illustre schématiquement une vue de dessus du capot de la sonde, selon un aspect de l'invention ;
[Fig.4] illustre schématiquement une vue de dessous du capot de la sonde, selon un aspect de l'invention ;
[Fig.5] illustre schématiquement une vue de dessous en transparence du capot de la sonde, selon un aspect de l'invention ;
[Fig.6] illustre schématiquement une vue de coupe du capot de la sonde, passant par un insert extérieur, selon un aspect de l'invention ;
[Fig.7] illustre schématiquement une vue de coupe du capot de la sonde, passant par un insert intérieur, selon un aspect de l'invention ;
[Fig.8] illustre schématiquement une vue de coupe du capot de la sonde, passant par un insert de continuité électrique, selon un aspect de l'invention ; et
[Fig.9] illustre schématiquement un dégagement du capot au niveau d'un insert de continuité électrique, selon un aspect de l'invention.

Dans la présente description, les modes de réalisation décrits ne sont pas limitatifs, et les caractéristiques et fonctions bien connues de l'homme du métier ne sont pas décrites en détails.

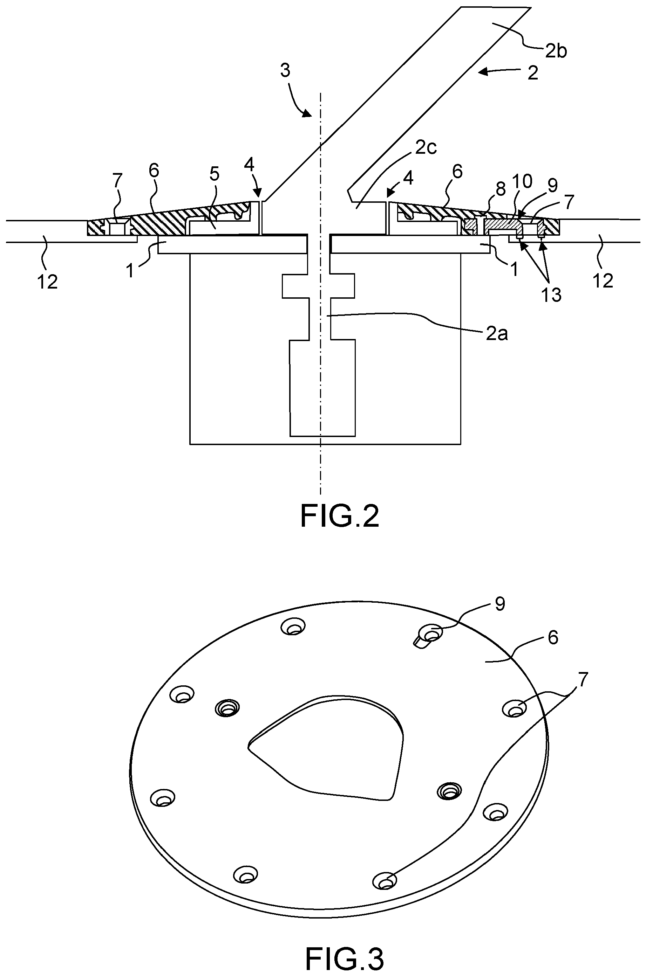

Sur la figure 2 est représentée schématiquement la partie supérieure d'une sonde de mesure aérodynamique destinée à mesurer une incidence locale de flux d'air circulant le long du fuselage d'un aéronef, comprenant un support 1, en l'espèce de forme circulaire, et un arbre mobile 2 en rotation selon un axe longitudinal 3, par rapport au support 1.

Le support 1 et l'arbre mobile 2 sont configurés pour former entre eux un interstice 4 qui permet de maintenir un jeu fonctionnel pour laisser pivoter librement une extrémité de l'arbre 2 dans le support 1, et qui communique avec un circuit d'évacuation d'impuretés.

L'arbre 2 comprend une partie 2a interne au support 1, une partie 2b girouette externe au support 1 et un plateau 2c embase ou socle de la partie girouette 2b reliant la partie interne 2a et la partie externe 2b girouette.

Le corps 5 contient un dispositif de réchauffage tout comme la partie 2b girouette externe de l'arbre 2. Le corps 5 comprend une ouverture centrale circulaire, traversée par l'arbre mobile 2, et est pris en sandwich entre le support 1 et un capot 6.

Le support 1 comprend le capot 6 circulaire à ouverture centrale, dont l'ouverture circulaire est traversée par l'arbre mobile 2.

Le capot 6 comprend du polyetheretherketone renforcé avec des fibres de verre ou de carbone, de conductivité thermique inférieure à 3 W.m^{-1.}K⁻¹, et est muni d'inserts métalliques 7, 8 au niveau de ses fixations.

Le capot 6 comprend une couronne externe de premiers inserts 7 en acier inoxydable disposés de manière circulaire vers l'extérieur du capot 6 pour venir fixer la plaque ou le capot 6 sur le fuselage d'avion. Le capot 6 comprend également une couronne interne de deuxièmes inserts 8 en laiton disposés de manière circulaire vers l'intérieur du capot 6 pour venir fixer le capot 6 sur le support 1.

Un capot 6 comprenant du polyetheretherketone renforcé avec des fibres de verre ou de carbone, de conductivité thermique inférieure à 3 W.m^{-1.}K⁻¹, permet une isolation thermique suffisante de la sonde dans les conditions sévères de vol.

En outre, de tels matériaux ont une densité comprise entre 1200kg/m³ et 1600kg/m³ permettant d'optimiser la masse par rapport à une plaque en aluminium dont la densité est de 2700kg/m³.

En outre, de tels matériaux sont anisotrope (propriété d'être dépendant de la direction, donc présenter des caractéristiques différentes selon son orientation). La mise en œuvre du capot 6 permet d'orienter les fibres de verre ou de carbone dans le plan horizontal et de limiter ainsi l'écart des coefficients de dilatation entre le capot ou plaque interface 6 (18 ppm/°C dans la direction du plan moyen de la plaque) et la contre plaque en aluminium au niveau du fuselage de l'avion (23 ppm/°C), et donc les contraintes thermomécaniques engendrées. Tandis que dans le plan transversal, les dilatations du polyetheretherketone renforcé avec des fibres de verre ou de carbone sont plus élevées (supérieures à 40ppm/°C).

La présence d'inserts métalliques 7, 8 au niveau de ses fixations permettent de garantir la tenue mécanique sous différents cas de charge tel que serrage des vis, dilatations différentielles, différentiel de pression, vibration.

Le capot 6 comprend des premiers inserts 7 en acier inoxydable surmoulés disposés de manière circulaire vers l'extérieur du capot 6, et des deuxièmes inserts 8 en laiton rapportés par ultrason disposés de manière circulaire vers l'intérieur du capot 6.

Le capot 6 comprend au moins un insert métallique 9 de continuité électrique configuré pour réaliser une liaison électrique entre la partie intérieure de la sonde et une interface 13 de l'insert métallique 9 disposé sous le pourtour inférieur de la partie de l'insert métallique la plus éloignée de l'arbre 2.

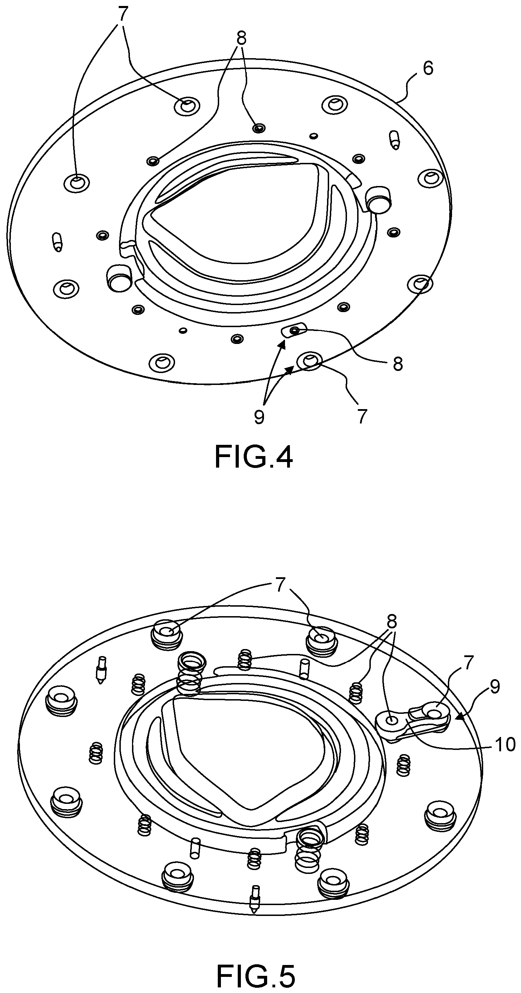

Les figure 3, figure 4 et figure 5 représentent un mode de réalisation du capot 6 et des inserts 7, 8 et 9, respectivement en vue de dessus, en vue de dessous, et en vue de dessous en transparence.

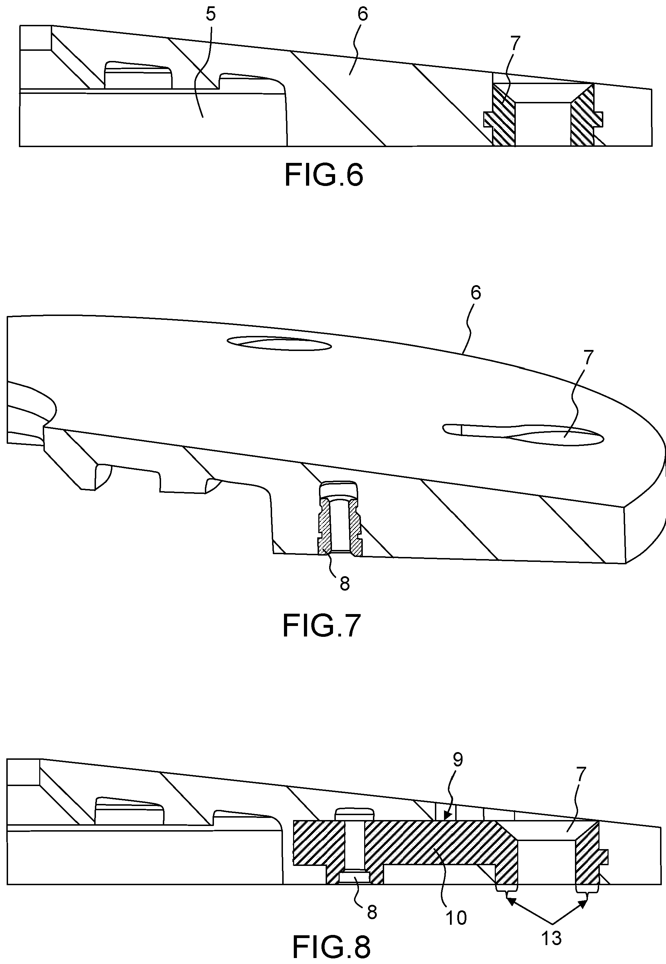

La figure 6 représente une vue de coupe d'un premier insert 7 en acier inoxydable, et la figure 7 représente une vue de coupe d'un deuxième insert 8 en laiton.

Par exemple, un insert métallique de continuité électrique 9 comprend un premier insert 7 et un deuxième insert 8 ainsi qu'une portion en acier inoxydable 10 reliant ledit premier insert 7 et ledit deuxième insert 8.

La figure 8 représente une vue de coupe d'un tel insert métallique de continuité électrique 9.

La présence d'au moins un tel insert 9 métallique de continuité électrique permet de faire le lien électrique entre l'intérieur et l'extérieur de la sonde, afin de pouvoir effectuer une mesure de vérification de la continuité de masse suffisamment fiable une fois le capot 6 installée sur un aéronef et la fixation mise en place.

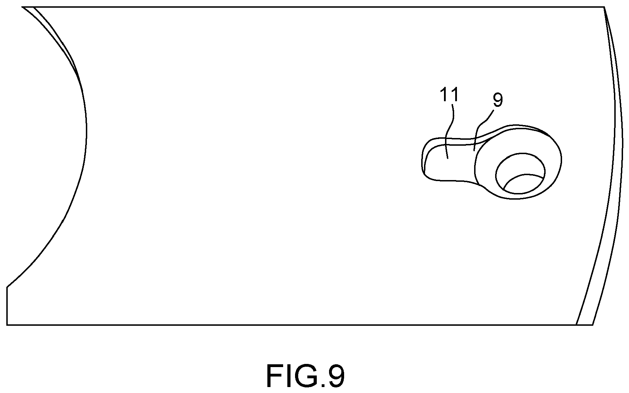

La figure 9 représente un dégagement 11 du capot 6 au niveau d'un insert 9 de continuité électrique, sur la partie supérieure du capot 6. Le dégagement 11 est configuré pour accéder à la partie supérieure de la portion en acier inoxydable 10 de l'insert métallique de continuité électrique 9, à proximité de son deuxième insert 8, de manière à pouvoir effectuer une mesure de vérification de la continuité de masse suffisamment fiable et aisée une fois le capot 6 installé sur un aéronef et la fixation mise en place.

Une sonde de mesure aérodynamique selon la présente invention permet d'assurer le maintien d'une sonde de mesure aérodynamique avec un capot ayant une masse optimisée tout en garantissant la tenue mécanique, la continuité électrique et une protection thermique.

## Revendications

1. Sonde de mesure aérodynamique destinée à mesurer une incidence locale de flux d'air circulant le long du fuselage d'un aéronef, comprenant un support (1), un corps réchauffé (5), et un arbre mobile (2) en rotation selon un axe longitudinal (3), par rapport au support (1) et au corps (5), le support (1), le corps (5), et l'arbre (2) étant configurés pour former entre eux un interstice (4), permettant de maintenir un jeu fonctionnel pour laisser pivoter librement une extrémité de l'arbre (2) dans le support (1), et communiquant avec un circuit d'évacuation d'impuretés, l'arbre (2) comprenant une partie (2a) interne au support (1), une partie (2b) girouette externe au support (1) et un plateau (2c) embase de la partie girouette (2b) reliant la partie interne (2a) et la partie externe (2b), le support (1) comprenant un capot (6) circulaire avec un ouverture centrale traversée par l'arbre mobile (2) la surface externe du capot (6) comprenant une face tronconique (6a) de révolution autour de l'axe longitudinal (3),
**caractérisé en ce que** le capot (6) comprend du polyetheretherketone renforcé avec des fibres de verre ou de carbone, de conductivité thermique inférieure à 3 W.m^{-1.}K⁻¹, et est muni d'inserts métalliques (7, 8) au niveau de ses fixations, au moins un insert métallique (9) de continuité électrique étant configuré pour réaliser une liaison électrique entre la partie intérieure de la sonde et une interface (13) de l'insert métallique (9) disposé sous le pourtour inférieur de la partie de l'insert métallique la plus éloignée de l'arbre (2).

2. Sonde selon la revendication 1, dans laquelle le capot (6) comprend des premiers inserts (7) en acier inoxydable disposés de manière circulaire vers l'extérieur du capot (6), et des deuxièmes inserts (8) en laiton disposés de manière circulaire vers l'intérieur du capot (6).

3. Sonde selon la revendication 2, dans laquelle un insert métallique de continuité électrique (9) comprend un premier insert (7) et un deuxième insert (8) ainsi qu'une portion en acier inoxydable (10) reliant ledit premier insert (7) et ledit deuxième insert (8).

4. Sonde selon l'une des revendications précédentes, dans laquelle le capot (6) comprend un dégagement (11) sur sa partie supérieure, configuré pour accéder à la partie supérieure de la portion en acier inoxydable (10) de l'insert métallique de continuité électrique (9), à proximité de son deuxième insert (8).

## Patentansprüche

1. Aerodynamische Messsonde, die dazu bestimmt ist, ein lokales Auftreten eines Luftstroms, der entlang eines Flugzeugrumpfes zirkuliert, zu messen, umfassend eine Halterung (1), einen erwärmten Körper (5) und eine in Bezug auf die Halterung (1) und den Körper (5) gemäß einer Längsachse (3) drehbewegliche Welle (2), wobei die Halterung (1), der Körper (5) und die Welle (2) konfiguriert sind, um untereinander einen Zwischenraum (4) zu bilden, der ermöglicht, ein funktionelles Spiel beizubehalten, um ein Ende der Welle (2) in der Halterung (1) frei schwenken zu lassen, und mit einem Kreislauf zur Abführung von Verunreinigungen zu kommunizieren, wobei die Welle (2) ein der Halterung (1) internes Teil (2a), ein der Halterung (1) externes Wetterfahnenteil (2b) und ein Sockelplateau (2c) des externen Wetterfahnenteils (2b) umfasst, das das interne Teil (2a) und das externe Teil (2b) verbindet, wobei die Halterung (1) eine kreisförmige Haube (6) mit einer zentralen Öffnung umfasst, die von der beweglichen Welle (2) durchquert wird, wobei die externe Oberfläche der Haube (6) eine kegelstumpfförmige Fläche (6a) zur Drehung um die Längsachse (3) herum umfasst,
**dadurch gekennzeichnet, dass** die Haube (6) mit Glasfasern oder Kohlenstoff verstärktes Polyetheretherketon mit einer Wärmeleitfähigkeit von weniger als 3 W.m⁻¹ K⁻¹ umfasst und mit metallischen Einschüben (7, 8) auf Höhe ihrer Befestigungen ausgestattet ist, wobei mindestens ein metallischer Einschub (9) zur elektrischen Kontinuität konfiguriert ist, um eine elektrische Verbindung zwischen dem inneren Teil der Sonde und einer Schnittstelle (13) des metallischen Einschubs (9) zu erzeugen, die unter dem unteren Umfang des Teils des metallischen Einschubs angebracht ist, der am weitesten von der Welle (2) entfernt ist.

2. Sonde nach Anspruch 1, wobei die Haube (6) erste Einschübe (7) aus Edelstahl, die auf kreisförmige Weise in Richtung der Außenseite der Haube (6) angebracht sind, und zweite Einschübe (8) aus Messing umfasst, die auf kreisförmige Weise in Richtung der Innenseite der Haube (6) angebracht sind.

3. Sonde nach Anspruch 2, wobei ein metallischer Einschub (9) zur elektrischen Kontinuität einen ersten Einschub (7) und einen zweiten Einschub (8) sowie einen Abschnitt (10) aus Edelstahl umfasst, der den ersten Einschub (7) und den zweiten Einschub (8) verbindet.

4. Sonde nach einem der vorstehenden Ansprüche, wobei die Haube (6) an ihrem oberen Teil eine Aussparung (11), die konfiguriert ist, um auf das obere Teil des Abschnitts (10) aus Edelstahl des metallischen Einschubs (9) zur elektrischen Kontinuität zuzugreifen, in der Nähe ihres zweiten Einschubs (8) umfasst.

## Claims

1. Aerodynamic measurement probe intended to measure a local angle of attack of an airflow circulating along the fuselage of an aircraft, comprising a support member (1), a heated body (5), and a shaft (2) able to rotate about a longitudinal axis (3) with respect to the support member (1) and the body (5), the support member (1), the body (5) and the shaft (2) being configured to form between them a gap (4) allowing functional play to be maintained so as to allow one end of the shaft (2) to pivot freely in the support member (1), and communicating with a circuit for discharging impurities, the shaft (2) comprising a part (2a) internal to the support member (1), a vane part (2b) external to the support member (1) and a base plate (2c) of the vane part (2b) connecting the internal part (2a) and the external part (2b), the support member (1) comprising a circular lid (6) with a central opening through which passes the movable shaft (2), the outer surface of the lid (6) comprising a frustoconical face (6a) exhibiting symmetry of revolution about the longitudinal axis (3),
**characterised in that** the lid (6) comprises polyether ether ketone reinforced with glass or carbon fibres, with a thermal conductivity of less than 3 W.m⁻¹ K⁻¹, and is provided with metallic inserts (7, 8) at its fastenings, at least one metallic electrical continuity insert (9) being configured to establish an electrical connection between the inner part of the probe and an interface (13) of the metallic insert (9) arranged under the lower periphery of that part of the metallic insert which is furthest away from the shaft (2).

2. Probe according to claim 1, wherein the lid (6) comprises first inserts (7) made of stainless steel and arranged in a circular manner toward the outside of the lid (6), and second inserts (8) made of brass and arranged in a circular manner toward the inside of the lid (6).

3. Probe according to claim 2, wherein a metallic electrical continuity insert (9) comprises a first insert (7) and a second insert (8), and a stainless steel portion (10) connecting said first insert (7) and said second insert (8).

4. Probe according to any one of the preceding claims, wherein the lid (6) comprises a clearance (11) on its upper part, which clearance is configured for access to the upper part of the stainless steel portion (10) of the metallic electrical continuity insert (9), in the vicinity of its second insert (8).
